# EUROPÄISCHE PATENTSCHRIFT

(11) **EP 2 639 048 B1**
(45) Veröffentlichungstag und Bekanntmachung des Hinweises auf die Patenterteilung: **20.01.2016**
(21) Anmeldenummer: 13159440.0
(22) Anmeldetag: 15.03.2013
(51) Int. Cl.: B29C 70/38

(54) **Faser-Legevorrichtung**
Fibre laying device
Dispositif de pose de fibres

(30) Priorität: 15.03.2012 DE 102012102204
(43) Veröffentlichungstag der Anmeldung: 18.09.2013
(73) Patentinhaber: Deutsches Zentrum für Luft- und Raumfahrt e.V., 51147 Köln (DE)
(72) Erfinder: Krombholz, Christian, 21614 Buxtehude (DE); Röstermundt, Dirk, 31224 Peine (DE); Perner, Marcus, 38118 Braunschweig (DE)
(74) Vertreter: Aisch, Sebastian

(56) Entgegenhaltungen:
- EP-A1- 1 533 107
- EP-B1- 1 899 147
- WO-A1-2011/134994
- JP-A- S62 144 927
- JP-A- 2010 253 789
- US-A1- 2004 226 651

## Beschreibung

Die Erfindung betrifft eine Faser-Legevorrichtung zur Herstellung eines Fasergeleges eines Faserverbundbauteils, mit einem Werkzeug zum Ablegen von Faserbahnen, einem Ablegekopf, der zum Legen von Faserbahnen auf dem Werkzeug ausgebildet ist, und einer Steuereinheit, die zum Ansteuern der Faser-Legevorrichtung so ausgebildet ist, dass an vorbestimmten Legepositionen die Faserbahnen durch den Ablegekopf auf dem Werkzeug abgelegt werden. Die Erfindung betrifft ebenso ein Herstellungsverfahren hierzu.

Bei der Fertigung von Großbauteilen aus Faserverbundwerkstoffen kommen zur Herstellung eines Fasergeleges auf einem Formwerkzeug große Portalanlagen zum Einsatz, die aus dem Stand der Technik bekannt sind. Auf einem Faserspulensystem sind die Faserbahnen, meist Tapes oder Tows genannt, angeordnet, die über einen Ablegekopf auf dem Werkzeug abgelegt werden, um die geometrische Form des herzustellenden Faserverbundbauteils aus mehreren Laminatschichten zu bilden. Je nach Größe der Portalanlage ist es nicht selten, dass sowohl der Ablegekopf als auch die mitzuführenden Materialspulen die Dimension eines Kleinwagens mit häufig über einer Tonne Gewicht haben. Aufgrund der hohen Masse und der großen Ausdehnung sind die Beweglichkeit und die kinematischen Abläufe in ihrer Dynamik begrenzt.

Die Planung der Legepositionen der einzelnen Faserbahnen auf dem Werkzeug wird in einer Offline-Programmierung simuliert und generiert. Anschließend werden die Faserbahnen entlang der aus der Offline-Programmierung generierten Positionen abgelegt, wobei es aufgrund der Größe und des Gewichtes der eingesetzten Portalanlagen zu Prozessungenauigkeiten kommen kann, die zu einer ungenauen Ablage der Faserbahnen auf dem Werkzeug führen. Insbesondere bei der Herstellung von sicherheitskritischen Großbauteilen kann ein zu großer, unerwünschter Abstand zwischen zwei benachbarten Faserbahnen zu einem Ausschuss und somit zu einer Kostensteigerung des Herstellungsprozesses führen. JP-A- 2010 25 3789 offenbart eine Faser-Legevorrichtung gemäß dem Oberbegriff des Anspruchs 1.

Ein weiterer Aspekt bei der Herstellung von Fasergelegen für Großbauteile aus Faserverbundwerkstoffen ist die Verteilung des Anpressdruckes über die Anpressrolle beim Legen der Faserbahnen auf das Werkzeug. Es hat sich gezeigt, dass aufgrund der Größe und des Gewichtes der verwendeten Portalanlagen sowohl der Anpressdruck als auch die Anpressdruckverteilung beim Legen derart schwankt, dass es teilweise nicht mehr reproduzierbaren Qualitäten bei der Herstellung der Bauteile kommen kann. So kann eine zu hohe Anpresskraft in bestimmten Bereichen der Faserbahnen dazu führen, dass aufgrund der starken Kompaktierung in diesem Bereich eine Beschädigung der Fasern oder der Faser-Matrix-Haftung bewirkt, was zu Fehlstellen innerhalb des Bauteils führt.

Es ist daher Aufgabe der vorliegenden Erfindung, eine Faser-Legevorrichtung und ein entsprechendes Herstellungsverfahren anzugeben, mit dem die Prozesssicherheit und Prozessgenauigkeit bei der Herstellung von Großbauteilen aus Faserverbundwerkstoffen erhöht werden kann.

Die Aufgabe wird mit der Faser-Legevorrichtung gemäß den Merkmalen des Anspruchs 1 gelöst.

Es wird somit vorgeschlagen, dass eine Kantenposition einer bereits auf dem Werkzeug abgelegten Faserbahn mit Hilfe einer Erfassungsvorrichtung erfasst und die so erfasste Kantenposition einer Faserbahnkante dann für eine entsprechende Korrektur der vorbestimmten Legepositionen der abzulegenden Faserbahnen herangezogen wird.

Unter Kenntnis der tatsächlichen Position einer bereits auf dem Werkzeug abgelegten Faserbahn lässt sich somit die abzulegende Faserbahn sehr genau an der bereits abgelegten Faserbahn ausrichten, so dass es in Teilbereichen weder zu Überlappungen der abgelegten Faserbahnen noch zu großen Lücken kommt, die zu Fehlstellen im späteren Bauteil führen können. Statt dessen kann auch bei großen und schweren Portalanlagen bzw. Robotoranlagen, die systemimmanent eine größere Prozessungenauigkeit bei der Ablage der Faserbahnen aufweisen, ein konstanter und gleichbleibender Abstand der einzelnen Faserbahnen erreicht werden, was zu einer Erhöhung der Prozessgenauigkeit und Wiederholbarkeit führt.

Unter einer Faserbahn wird ein flächiges Faserhalbzeug verstanden, dass auf einem Werkzeug ablegbar ist und somit in mehreren Laminatschichten das Faserbauteil bilden kann.

Vorteilhafterweise ist die Kanten-Erfassungsvorrichtung so ausgebildet, dass die Kantenposition einer benachbarten Faserkante, die an die abzulegende Faserbahn an mindestens einer Seite angrenzt, erfasst wird. Dadurch lässt sich die abzulegende Faserbahn mit einem vorbestimmten Abstand exakt an die bereits gelegte Faserbahn benachbart anlegen.

Insbesondere hierfür ist es besonders vorteilhaft, wenn die Kanten-Erfassungsvorrichtung mindestens einen Faserkantensensor hat, der in einer Ablegerichtung vor dem Ablegekopf beabstandet angeordnet ist und dadurch vorlaufend die Faserkantenposition der insbesondere benachbarten Faserbahnen erfassen kann. Ein solcher Faserkantensensor kann beispielsweise ein Laserlichtschnittsensor sein.

Besonders vorteilhaft ist es nun, wenn die Faserbahn-Legevorrichtung darüber hinaus auch eine Anpresskraft-Erfassungsvorrichtung aufweist, die zum Erfassen der Stärke und/oder Richtung einer Ist-Anpresskraft, die beim Legen einer Faserbahn durch den Ablegekopf auf die Faserbahn wirkt, ausgebildet ist und eine Regelungsvorrichtung vorgesehen ist, die zum Regeln der Stärke und/oder Richtung der auf die Faserbahn wirkenden Anpresskraft beim Legen der Faserbahn in Abhängigkeit von der erfassten Stärke und/oder Richtung der Ist-Anpresskraft und der Stärke und/oder Richtung der vorliegenden Soll-Anpresskraft ausgebildet ist.

Mit Hilfe einer entsprechenden Kraftsensorik lässt sich die Stärke und/oder Richtung der momentanen IST-Anpresskraft beim Legen der Faserbahn ermit-teln, die mit Hilfe einer Regelungsvorrichtung dazu genutzt werden kann, die Anpresskraft bezüglich der Stärke und/oder Richtung während des Legens der Faserbahnen entsprechend vorgegebene Soll-Anpresskräfte zu regulieren. Dadurch kann eine konstante Anpresskraft über den gesamten Herstellungsprozess realisiert werden.

Durch die Ermittlung der Richtung der wirkenden Anpresskraft kann darüber hinaus verhindert werden, dass beispielsweise aufgrund einer nicht gleichmäßigen Kräfteverteilung beim Legen der Faserbahnen es zu Materialkompaktierungen oder Stauchungen kommt, die beim späteren Bauteil zu Fehlstellen führen.

Die Stärke und/oder Richtung der IST-Anpresskraft kann aber auch aus internen Maschinendaten der Faser-Legevorrichtung ermittelt werden.

Ein enormer Vorteil gegenüber gängigen Legevorrichtungen besteht damit darin, dass eine gesamtheitliche Korrektur bzw. Regelung während der Ablage der Faserbahnen unter Berücksichtigung der Material- und Prozessanforderungen realisiert werden kann. Insbesondere bei der Verwendung drucklabiler Materialien, wie beispielsweise Schäume und Wabenstrukturen, auf denen die Faserbahnen abgelegt werden sollen, kann mittels der Anpresskraft-Regelung ein Defekt durch eine zu große Anpresskraft vermieden werden.

Ein weiterer Vorteil besteht darüber hinaus darin, dass mit Hilfe dieser vorgeschlagenen Regelung der Anpresskraft eine im Wesentlichen konstante Anpresskraft während der Ablage der Faserbahnen erreicht werden kann, was die Prozessgenauigkeit der Ablage wesentlich erhöht. Vorteilhafterweise ist die Anpresskraft-Erfassungsvorrichtung derart ausgebildet, dass sie einen Neigungswinkel des Ablegekopfes gegenüber der Werkzeugoberfläche erfassen kann und basierend darauf dann die Richtung der Ist-Anpresskraft aus dem Neigungswinkel ermitteln kann.

Alternativ oder zusätzlich dazu kann die Anpresskraft-Erfassungsvorrichtung auch ausgebildet sein, ein Neigungsmoment des Ablegekopfes zu erfassen und basierend darauf dann die Richtung der Ist-Anpresskraft aus dem Neigungsmoment zu ermitteln. Ein solches Neigungsmoment kann beispielsweise mit Hilfe von Beschleunigungssensoren oder internen Maschinendaten ermittelt werden.

In einer vorteilhaften Ausführungsform weist der Ablegekopf eine Anpressrolle zum Legen der Faserbahn auf dem Werkzeug auf und hat zumindest einen Kraftsensor zum Erfassen der Stärke der Isf-Anpresskraft, der zwischen Anpressrolle und Ablegekopf angeordnet ist. Hierdurch lässt sich die Stärke der Anpresskraft ohne großen Einfluss der Anlagendynamik, insbesondere der Länge der kinematischen Kette und der äußeren Kräfte, ermitteln.

Wie bereits angedeutet, ist es im Übrigen auch ganz besonders vorteilhaft, wenn der Ablegekopf eine Anpressrolle zum Legen der Faserbahn auf dem Werkzeug hat und die Regelungsvorrichtung zum Regeln der Richtung der Anpresskraft derart eingerichtet ist, dass eine im Wesentlichen gleichmäßige Anpresskraftverteilung auf der Anpressrolle erreicht wird. Hierdurch können insbesondere Materialstauchungen quer zur Ablegerichtung vermieden werden.

Darüber hinaus ist es ganz besonders vorteilhaft, wenn die Korrekturvorrichtung weiterhin zum Korrigieren der vorbestimmten Legeposition der abzulegenden Faserbahn in Abhängigkeit von einem vorbestimmten Abstand zu der benachbarten Faserbahn und/oder einer anderen bereits abgelegten Faserbahn eingerichtet ist. Hierdurch kann die offline programmierte Legeposition dahingehend korrigiert werden, dass ein konstanter Abstand der einzelnen Faserbahnen erreicht wird, was zu einer besonders hohen Prozessgenauigkeit und Wiederholbarkeit führt.

Die Aufgabe wird im Übrigen auch gelöst durch ein Verfahren zum Herstellen eines Fasergeleges eines Faserverbundbauteils gemäß den Merkmalen des Anspruchs 9.

Vorteilhafte Ausgestaltungen des Verfahrens befinden sich in den entsprechenden Unteransprüchen.

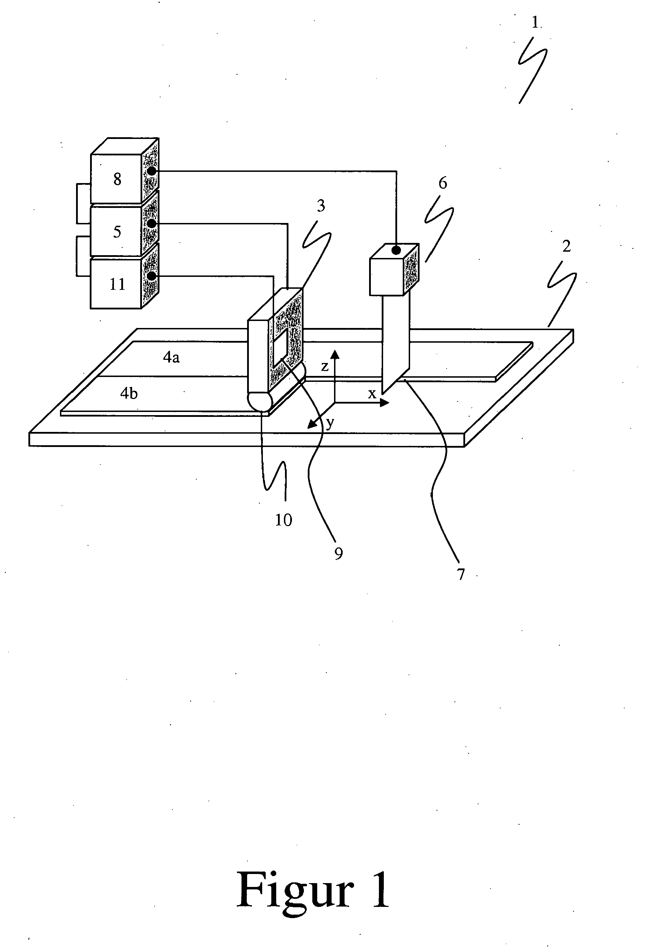

Die Erfindung wird anhand der beigefügten Figur beispielhaft erläutert. Es zeigt
- Figur 1: - schematische Darstellung der erfindungsgemäßen Faser-Legevorrichtung.

Figur 1 zeigt schematisch die erfindungsgemäße Faser-Legevorrichtung 1 mit einem Werkzeug 2, auf dem mit Hilfe eines Ablegekopfes 3 Faserbahnen 4a, 4b gelegt werden können. Bei vielen Portalsystemen oder Robotersystemen wird der Ablegekopf der Legevorrichtung auch Endeffektor genannt.

Das Werkzeug 2 ist ein Formwerkzeug, welches die spätere Geometrie des Fasergeleges, das sich aus den abgelegten Faserbahnen 4a, 4b (und weiteren nicht dargestellten) ergibt, definiert.

Der Ablegekopf 3 bzw. Endeffektor kann an einer großen Portalanlage oder Roboteranlage (nicht dargestellt) angeordnet sein, die so ausgebildet ist, dass der Ablegekopf 3 über dem Werkzeug 2 an vorbestimmten Legepositionen gebracht und die Faserbahnen somit an ihren definierten Legepositionen auf dem Werkzeug 2 abgelegt werden können. Denkbar ist aber auch, dass der Endeffektor 3 starr angeordnet ist und das Werkzeug 2 auf einem bewegbaren Untergrund derart angeordnet ist, dass durch eine Verschiebung in X- bzw. YRichtung die gewünschte Legeposition einstellbar ist.

Im Ausführungsbeispiel der Figur 1 ist der Ablegekopf 3 über eine entsprechende Steuerkette mit einer Steuereinheit 5 verbunden, die zum Ansteuern der Faser-Legevorrichtung so ausgebildet ist, dass an vorbestimmten Legepositionen die Faserbahnen durch den Ablegekopf 3 auf dem Werkzeug 2 abgelegt werden. Hierfür kann, wie bereits erwähnt, beispielsweise der Ablegekopf in X- und Y-Richtung sowie in Z-Richtung verfahren bzw. um die 3 Raumwinkel gedreht werden.

Erfindungsgemäß ist nunmehr eine Kanten-Erfassungsvorrichtung 6 an der Faser-Legevorrichtung 1 vorgesehen, die zum Erfassen einer Kantenposition einer Faserbahnkante 7 einer benachbarten Faserbahn 4a bzw. der aktuell abzulegenden Faserbahn 4b eingerichtet ist. Eine solche Kanten-Erfassungsvorrichtung 6 kann beispielsweise als Faserkantensensor einen Laserlichtschnittsensor aufweisen.

Auch die Kanten-Erfassungsvorrichtung 6 kann an der nicht dargestellten Portalanlage so angeordnet sein, dass sie im Verhältnis zum Ablegekopf 3 starr angeordnet ist und mit dem Ablegekopf 3 in die entsprechende Richtung verfahrbar ist.

Über eine entsprechende Wirk- und Kommunikationskette ist die Kanten-Erfassungsvorrichtung 6 mit einer Korrekturvorrichtung 8 verbunden, welche die von der Kanten-Erfassungsvorrichtung 6 erfassten Kantenposition der Faserbahnkante 7 erhält. Die Korrekturvorrichtung 8 ist mit der Steuereinheit 5 verbunden und kann integraler Bestandteil der Steuereinheit 5 sein. Die Korrekturvorrichtung 8 ist so ausgebildet, dass sie die vorbestimmte Legeposition einer abzulegenden Faserbahn 4b anhand der erfassten Kantenposition der Faserbahnkante 7 der benachbarten, bereits abgelegten Faserbahn 4a so korrigiert, dass sich ein konstanter Abstand während des gesamten Herstellungsprozesses zwischen den beiden Faserbahnen 4a und 4b ergibt.

Denkbar ist aber auch, dass die Korrekturvorrichtung 8 über interne Antriebe und/oder externe Zusatzachsen verfügt und eine Korrektur der vorbestimmten Legeposition aufgrund der Kantenposition der Faserbahnkante 7 so vornimmt, dass durch eine zusätzliche Positionsveränderung des Ablegekopfes 3 die vorbestimmte Legeposition korrigiert und ein konstanter Abstand zur benachbarten Faserbahn 4a eingehalten wird.

Denkbar ist aber auch, dass die Korrekturvorrichtung 8 mit dem Ablegekopf 3 und den Antrieben so verbunden ist, dass zusätzlich zu der Ansteuerung durch die Steuereinheit 5 zur Einstellung der vorbestimmten Legepositionen zusätzliche Positionsveränderungen aufgeprägt werden, die zu einer Korrektur der vorbestimmten Legeposition führen. So ist es beispielsweise denkbar, dass der Ablegekopf 3 um die Z-Achse gedreht wird, um eine entsprechende Korrektur in Y-Richtung der Legeposition aufgrund der erkannten Position der Faserbahnkante 7 vorzunehmen. Bei großen Korrekturen kann durch die Drehung des Ablegekopfes 3 um die Z-Achse ein Verschieben des Materials in Y-Richtung verhindert werden.

Darüber hinaus weist der Ablegekopf 3 in dem Ausführungsbeispiel der Figur 1 zusätzliche Kraft- und Momentsensoren 9 auf, mit denen die Anpresskraft in Bezug auf die Stärke und/oder Richtung ermittelt werden kann (Anpresskraft-Erfassungsvorrichtung). So weist der Ablegekopf 3 am unteren Ende eine Anpressrolle 10 auf, mit der die abzulegenden Faserbahnen auf das Werkzeug 2 mit einer vorbestimmten Anpresskraft abgelegt werden sollen. Mit Hilfe der Kraft- und Momentsensoren 9 kann die Stärke der Anpresskraft erfasst werden, die momentan beim Ablegen der Faserbahn 4b auf die Faserbahn 4b wirkt. Darüber hinaus kann mit Hilfe einer Momentsensorik 9 die Momente um die X-Achse und die Y-Achse gemessen werden. Zusätzlich oder alternativ hierzu kann auch ein Neigungswinkel des Ablegekopfes 3 gegenüber dem Werkzeug 2 ermittelt werden.

Die Kraft- und/oder Momentsensoren 9 sind mit einer Regelungsvorrichtung 11 verbunden, die in Abhängigkeit der ermittelten Stärke und/oder Richtung der gemessenen Ist-Anpresskraft und einer vorgegebenen Stärke und/oder Richtung einer Soll-Anpresskraft den Ablegekopf 3 so ansteuert, dass die gewünschte Anpresskraft bezüglich Stärke und/oder Richtung eingestellt wird. So kann beispielsweise der Ablegekopf 3 um die X-Achse oder die Y-Achse gedreht werden, um eine möglichst gleichmäßige Anpresskraftverteilung auf der Anpressrolle 10 zu erreichen. Durch ein Verfahren in Z-Richtung lässt sich darüber hinaus die entsprechende Stärke der Anpresskraft regulieren und an die gewünschte Soll-Anpresskraft anpassen.

Hierdurch ist eine material- und prozessoptimierte Ablage zur Fertigung von Faserverbundbauteilen in der Fiber Placement und Tape Laying Technology möglich.

## Patentansprüche

1. Faser-Legevorrichtung (1) zur Herstellung eines Fasergeleges eines Faserverbundbauteils mit
- einem Werkzeug (2) zum Ablegen von Faserbahnen (4a, 4b),
- einem Ablegekopf (3), der zum Legen von Faserbahnen (4a, 4b) auf dem Werkzeug (2) ausgebildet ist, und
- einer Steuereinheit (5), die zum Ansteuern der Faser-Legevorrichtung (1) so ausgebildet ist, dass an vorbestimmten Legepositionen die Faserbahnen (4a, 4b) durch die Ablegekopf (3) auf dem Werkzeug (2) abgelegt werden,
wobei
- eine Kanten-Erfassungsvorrichtung (6), die zum Erfassen einer Kantenposition zumindest einer Faserbahnkante (7) mindestens einer bereits auf dem Werkzeug (2) abgelegten Faserbahn (4a) ausgebildet ist, und
- eine Korrekturvorrichtung (8) vorgesehen ist, die zum Korrigieren einer vorbestimmten Legeposition einer abzulegenden Faserbahn (4b) in Abhängigkeit von der erfassten Kantenposition der Faserbahnkante (7) der mindestens einen bereits abgelegten Faserbahn (4a) eingerichtet ist,
**dadurch gekennzeichnet, dass** der Ablegekopf (3) um die Z-Achse gedreht werden Kann, um eine entsprechende Korrektur der Ablegerichtung aufgrund der erkannten Position der Faserbahnkante (7) vorzunehmen, wobei die Z-Achse als senkrecht zu der Legeoberfläche definiert ist.

2. Faser-Legevorrichtung (1) nach Anspruch 1, **dadurch gekennzeichnet, dass** die Kanten-Erfassungsvorrichtung (6) so ausgebildet ist, dass die Kantenposition einer benachbarten Faserbahnkante (7), die an die abzulegende Faserbahn (4b) an mindestens einer Seite angrenzt, erfasst wird.

3. Faser-Legevorrichtung (1) nach Anspruch 1 oder 2, **dadurch gekennzeichnet, dass** die Kanten-Erfassungsvorrichtung 6 mindestens einen in einer Ablegerichtung vor dem Ablegekopf (3) beabstandet angeordneten Faserkantensensor hat.

4. Faser-Legevorrichtung (1) nach einem der vorhergehenden Ansprüche, **dadurch gekennzeichnet, dass**
- eine Anpresskraft-Erfassungsvorrichtung (9), die zum Erfassen der Stärke und/oder Richtung einer Ist-Anpresskraft, die beim Legen einer Faserbahn (4b) durch den Ablegekopf (3) auf die Faserbahn (4b) wirkt, ausgebildet ist, und
- eine Regelungsvorrichtung (11) vorgesehen ist, die zum Regeln der Stärke und/oder Richtung der auf die Faserbahn (2) wirkenden Anpresskraft beim Legen der Faserbahn (4b) in Abhängigkeit von der erfassten Stärke und/oder Richtung der Ist-Anpresskraft und der Stärke und/oder Richtung einer vorgegebenen Soll-Anpresskraft ausgebildet ist.

5. Faser-Legevorrichtung (1) nach Anspruch 4, **dadurch gekennzeichnet, dass** die Anpresskraft-Erfassungsvorrichtung (9) zum Erfassen eines Neigungswinkel des Ablegekopfes (3) gegenüber der Oberfläche des Werkzeugs (2) und/oder zum Erfassen eines Neigungsmoments des Ablegekopfes (3) und zum Ermitteln der Richtung der Ist-Anpresskraft aus dem Neigungswinkel und/oder Neigungsmoment eingerichtet ist.

6. Faser-Legevorrichtung (1) nach einem der vorhergehenden Ansprüche, **dadurch gekennzeichnet, dass** der Ablegekopf (3) eine Anpressrolle (10) zum Legen der Faserbahn auf dem Werkzeug (2) hat und zumindest ein Kraftsensor zum Erfassen der Stärke der Ist-Anpresskraft zwischen Anpressrolle (10) und Ablegekopf (3) angeordnet ist.

7. Faser-Legevorrichtung (1) nach einem der vorhergehenden Ansprüche, **dadurch gekennzeichnet, dass** der Ablegekopf (3) eine Anpressrolle (10) zum Legen der Faserbahn (4b) auf dem Werkzeug (2) hat und die Regelungsvorrichtung (11) zum Regeln der Richtung der Anpresskraft derart eingerichtet ist, dass eine gleichmäßige Anpresskraftverteilung auf der Anpressrolle (10) erreicht wird.

8. Faser-Legevorrichtung (1) nach einem der vorhergehenden Ansprüche, **dadurch gekennzeichnet, dass** die Korrekturvorrichtung (5) zum Korrigieren der vorbestimmten Legeposition einer abzulegenden Faserbahn (4b) in Abhängigkeit von der erfassten Kantenposition der Faserbahnkante (7) der mindestens einen bereits abgelegten Faserbahn (4a) und in Abhängigkeit von einem vorbestimmten Abstand eingerichtet ist.

9. Verfahren zur Herstellung eines Fasergeleges eines Faserverbundbauteils, bei dem Faserbahnen auf einem Werkzeug durch einen Ablegekopf angelegt werden, mit
- Bereitstellen einer Faser-Legevorrichtung mit einem Werkzeug zum Ablegen von Faserbahnen und einem Ablegekopf, der zum Legen von Faserbahnen auf dem Werkzeug ausgebildet ist, und
- Bereitstellen von vorbestimmten Legepositionen, an denen die Faserbahnen auf dem Werkzeug durch den Ablegekopf abgelegt werden sollen,
- Erfassen einer Kantenposition zumindest einer Faserbahnkante mindestens einer bereits auf dem Werkzeug abgelegten Faserbahn durch eine Kanten-Erfassungsvorrichtung,
- Korrigieren einer vorbestimmten Legeposition einer auf dem Werkzeug abzulegenden Faserbahn in Abhängigkeit von der erfassten Kantenposition der Faserbahnkante der mindestens einen bereits abgelegten Faserbahn durch eine Korrektureinheit, und
**gekennzeichnet durch**,
- Ansteuern der Faser-Legevorrichtung **durch** eine Steuereinheit derart, dass die abzulegende Faserbahn **durch** den Ablegekopf an der vorbestimmten, korrigierten Legeposition auf dem Werkzeug abgelegt wird, in dem der Ablegekopf um die Z-Achse gedreht wird, um eine entsprechende Korrektur der Ablegerichtung aufgrund der erkannten Position der Faserbahnkante (7) vorzunehmen, wobei die Z-Achse als senkrecht zu der Legeoberfläche definiert ist.

10. Verfahren nach Anspruch 9, **gekennzeichnet durch** Erfassen einer Kantenposition einer bereits auf dem Werkzeug abgelegten benachbarten Faserbahn, die an eine abzulegende Faserbahn an mindestens einer Seite angrenzt.

11. Verfahren nach Anspruch 9 oder 10, **gekennzeichnet durch**
- Erfassen der Stärke und/oder Richtung einer Ist-Anpresskraft, die beim Legen der Faserbahn **durch** den Ablegekopf auf der Faserbahn wirkt, **durch** eine Anpresskraft-Erfassungsvorrichtung der Faser-Legevorrichtung und
- Regeln der Stärke und/oder Richtung der auf die Faserbahn wirkenden Anpresskraft beim Legen der Faserbahn in Abhängigkeit von der erfassten Stärke und/oder Richtung der Ist-Anpresskraft und der Stärke und/oder Richtung einer vorgegebenen Soll-Anpresskraft **durch** eine Regelungsvorrichtung der Faser-Legevorrichtung.

12. Verfahren nach einem der Ansprüche 9 bis 11, **gekennzeichnet durch** Erfassen eines Neigungswinkels des Ablegekopfes gegenüber der Werkzeugoberfläche und/oder Erfassen eines Neigungsmomentes des Ablegekopfes und Ermitteln der Richtung der Ist-Anpresskraft aus dem erfassten Neigungswinkel und/oder Neigungsmoment **durch** die Anpresskraft-Erfassungsvorrichtung.

13. Verfahren nach einem der Ansprüche 9 bis 12, **gekennzeichnet durch** Regeln der Richtung der Anpresskraft derart, dass eine gleichmäßige Anpresskraftverteilung auf einer an dem Ablegekopf zum Legen der Faserbahn angeordneten Anpressrolle erreicht wird.

## Claims

1. Fibre-laying device (1) for producing a fibrous structure of a fibre-composite component, having
- a tool (2) for depositing fibrous webs (4a, 4b),
- a depositing head (3) which is configured for laying fibrous webs (4a, 4b) on the tool (2), and
- a control unit (5) which for actuating the fibre-laying device (1) is configured such that the fibrous webs (4a, 4b) are deposited by the depositing head (3) at predetermined laying positions on the tool (2),
wherein
- an edge-detection device (6) which is configured for detecting an edge position of at least one fibrous-web edge (7) of at least one fibrous web (4a) which has already been deposited on the tool (2), and
- a correction device (8) which is adapted for correcting a predetermined laying position of a fibrous web (4b) to be deposited, depending on the detected edge position of the fibrous-web edge (7) of the at least one already deposited fibrous web (4a), are provided,
**characterized in that** the depositing head (3) can be rotated about the axis Z so as to perform a corresponding correction of the depositing direction, based on the identified position of the fibrous-web edge (7), wherein the axis Z is defined so as to be perpendicular to the laying surface.

2. Fibre-laying device (1) according to Claim 1, **characterized in that** the edge-detection device (6) is configured such that the edge position of an adjacent fibrous-web edge (7) which on at least one side adjoins the fibrous web (4b) to be deposited is detected.

3. Fibre-laying device (1) according to Claim 1 or 2, **characterized in that** the edge-detection device (6) has at least one fibrous edge sensor which in the depositing direction is disposed so as to be ahead of and spaced apart from the depositing head (3).

4. Fibre-laying device (1) according to one of the preceding claims,
**characterized in that**
- a contact-pressure detection device (9) for detecting the intensity and/or direction of an actual contact pressure which during laying of a fibrous web (4b) by way of the depositing head (3) acts on the fibrous web (4b) is configured, and
- a regulating device (11) which is configured for regulating the intensity and/or direction of the contact pressure which during laying of the fibrous web (4b) acts on the fibrous web (2), depending on the detected intensity and/or direction of the actual contact pressure and the intensity and/or direction of a predefined nominal contact pressure, is provided.

5. Fibre-laying device (1) according to Claim 4, **characterized in that** the contact-pressure detection device (9) is adapted for detecting a tilting angle of the depositing head (3) in relation to the surface of the tool (2) and/or for detecting a tilting momentum of the depositing head (3) and for determining the direction of the actual contact pressure from the tilting angle and/or the tilting momentum.

6. Fibre-laying device (1) according to one of the preceding claims, **characterized in that** the depositing head (3) has a contact roller (10) for laying the fibrous web on the tool (2), and at least one force sensor for detecting the intensity of the actual contact pressure is disposed between the contact roller (10) and the depositing head (3).

7. Fibre-laying device (1) according to one of the preceding claims, **characterized in that** the depositing head (3) has a contact roller (10) for laying the fibrous web (4b) on the tool (2), and the regulating device (11) for regulating the direction of the contact pressure is adapted in such a manner that uniform distribution of the contact pressure on the contact roller (10) is achieved.

8. Fibre-laying device (1) according to one of the preceding claims, **characterized in that** the correction device (5) is adapted for correcting the predetermined laying position of a fibrous web (4b) to be deposited depending on the detected edge position of the fibrous-web edge (7) of the at least one already deposited fibrous web (4a) and depending on a predetermined spacing.

9. Method for producing a fibrous structure of a fibre-composite component, in which the fibrous webs are placed on a tool by a depositing head, the method comprising:
- providing a fibre-laying device having a tool for depositing fibrous webs, and a depositing head which is configured for laying fibrous webs on the tool, and
- providing predetermined laying positions at which the fibrous webs are to be deposited on the tool by way of the depositing head,
- detecting an edge position of at least one fibrous-web edge of at least one fibrous web which has already been deposited on the tool by an edge-detection device,
- correcting a predetermined laying position of a fibrous web to be deposited on the tool, depending on the detected edge position of the fibrous-web edge of the at least one already deposited fibrous web by a correcting unit, and
**characterized by**
actuating the fibre-laying device by way of a control unit in such a manner that the fibrous web to be deposited by way of the depositing head is deposited at the predetermined and corrected laying position on the tool in that the depositing head is rotated about the axis Z so as to perform a corresponding correction of the depositing direction, based on the identified position of the fibrous-web edge (7), wherein the axis Z is defined so as to be perpendicular to the laying surface.

10. Method according to Claim 9, **characterized by** detecting an edge position of an adjacent fibrous web which has already been deposited on the tool and which on at least one side adjoins a fibrous web to be deposited.

11. Method according to Claim 9 or 10, **characterized by**
- detecting the intensity and/or direction of an actual contact pressure which during laying of the fibrous web by way of the depositing head acts on the fibrous web by a contact-pressure detection device of the fibre-laying device, and
- regulating the intensity and/or direction of the contact pressure which during laying of the fibrous web acts on the fibrous web, depending on the detected intensity and/or direction of the actual contact pressure and the intensity and/or direction of a predefined nominal contact pressure, by a regulating device of the fibre-laying device.

12. Method according to one of Claims 9 to 11, **characterized by** detecting a tilting angle of the depositing head in relation to the surface of the tool and/or for detecting a tilting momentum of the depositing head and by determining the direction of the actual contact pressure from the tilting angle and/or the tilting momentum by the contact-pressure detection device.

13. Method according to one of Claims 9 to 12, **characterized by** regulating the direction of the contact pressure in such a manner that uniform distribution of the contact pressure on a contact roller which is disposed on the depositing head for laying the fibrous web is achieved.

## Revendications

1. Dispositif de pose de fibres (1) pour créer une nappe fibreuse d'un composite renforcé par des fibres, comprenant :
- un outil (2) pour poser des bandes fibreuses (4a, 4b),
- une tête de pose (3) qui est réalisée pour poser des bandes fibreuses (4a, 4b) sur l'outil (2), et
- une unité de commande (5) qui est réalisée pour commander le dispositif de pose de fibres (1) de telle sorte que les bandes fibreuses (4a, 4b) soient posées par la tête de pose (3) sur l'outil (2) dans des positions de pose prédéterminées,
- un dispositif de détection de bord (6), qui est réalisé pour détecter une position de bord d'au moins un bord de bande fibreuse (7) d'au moins une bande fibreuse (4a) déjà posée sur l'outil (2), et
- un dispositif de correction (8) étant prévu, lequel est prévu pour corriger une position de pose prédéterminée d'une bande fibreuse à poser (4b) en fonction de la position de bord détectée du bord de bande fibreuse (7) de l'au moins une bande fibreuse (4a) déjà posée,
**caractérisé en ce que**
la tête de pose (3) peut être tournée autour de l'axe Z pour effectuer une correction correspondante du dispositif de pose sur la base de la position détectée du bord de bande fibreuse (7), l'axe Z étant défini comme étant perpendiculaire à la surface de pose.

2. Dispositif de pose de fibres (1) selon la revendication 1, **caractérisé en ce que** le dispositif de détection de bord (6) est réalisé de telle sorte que la position de bord d'un bord de bande fibreuse adjacent (7), qui est adjacent à la bande fibreuse à poser (4b) au niveau d'au moins un côté, soit détectée.

3. Dispositif de pose de fibres (1) selon la revendication 1 ou 2, **caractérisé en ce que** le dispositif de détection de bord (6) présente au moins un capteur de bord de fibre disposé à distance de la tête de pose (3) dans une direction de pose.

4. Dispositif de pose de fibres (1) selon l'une quelconque des revendications précédentes, **caractérisé en ce**
- **qu'**un dispositif de détection de la force de pressage (9) est prévu, lequel est réalisé pour détecter la force et/ou la direction d'une force de pressage réelle qui agit sur la bande fibreuse (4b) lors de la pose d'une bande fibreuse (4b) par la tête de pose (3), et
- **qu'**un dispositif de réglage (11) est prévu, lequel est réalisé pour régler la force et/ou la direction de la force de pressage agissant sur la bande fibreuse (2) lors de la pose de la bande fibreuse (4b) en fonction de la force et/ou de la direction détectée de la force de pressage réelle et de la force et/ou de la direction d'une force de pressage de consigne prédéfinie.

5. Dispositif de pose de fibres (1) selon la revendication 4, **caractérisé en ce que** le dispositif de détection de la force de pressage (9) est prévu pour détecter un angle d'inclinaison de la tête de pose (3) par rapport à la surface de l'outil (2) et/ou pour détecter un moment d'inclinaison de la tête de pose (3) et pour déterminer la direction de la force de pressage réelle à partir de l'angle d'inclinaison et/ou du moment d'inclinaison.

6. Dispositif de pose de fibres (1) selon l'une quelconque des revendications précédentes, **caractérisé en ce que** la tête de pose (3) présente un rouleau de pressage (10) pour poser la bande fibreuse sur l'outil (2) et au moins un capteur de force est prévu pour détecter la force de la force de pressage réelle entre le rouleau de pressage (10) et la tête de pose (3).

7. Dispositif de pose de fibres (1) selon l'une quelconque des revendications précédentes, **caractérisé en ce que** la tête de pose (3) présente un rouleau de pressage (10) pour poser la bande fibreuse (4b) sur l'outil (2) et le dispositif de réglage (11) pour régler la direction de la force de pressage est ajusté de manière à obtenir une répartition de la force de pressage uniforme sur le rouleau de pressage (10).

8. Dispositif de pose de fibres (1) selon l'une quelconque des revendications précédentes, **caractérisé en ce que** le dispositif de correction (5) est prévu pour corriger la position de pose prédéterminée d'une bande fibreuse à poser (4b) en fonction de la position de bord détectée du bord de bande fibreuse (7) de l'au moins une bande fibreuse (4a) déjà posée et en fonction d'une distance prédéterminée.

9. Procédé de fabrication d'une nappe fibreuse d'un composite renforcé par des fibres, dans lequel des bandes fibreuses sont appliquées sur un outil par une tête de pose, comprenant :
- la fourniture d'un dispositif de pose de fibres avec un outil pour poser des bandes fibreuses et une tête de pose qui est réalisée pour poser des bandes fibreuses sur l'outil, et
- l'établissement de positions de pose prédéterminées au niveau desquelles les bandes fibreuses doivent être posées sur l'outil par la tête de pose,
- la détection d'une position de bord d'au moins un bord de bande fibreuse d'au moins une bande fibreuse déjà posée sur l'outil par un dispositif de détection de bord,
- la correction d'une position de pose prédéterminée d'une bande fibreuse à poser sur l'outil en fonction de la position de bord détectée du bord de bande fibreuse de l'au moins une bande fibreuse déjà posée par une unité de correction, et
**caractérisé par**
- la commande du dispositif de pose de fibres par une unité de commande de telle sorte que la bande fibreuse à poser soit posée par la tête de pose sur l'outil dans la position de pose prédéterminée corrigée, la tête de pose étant tournée autour de l'axe Z afin d'effectuer une correction correspondante de la direction de pose sur la base de la position détectée du bord de bande fibreuse (7), l'axe Z étant défini comme étant perpendiculaire à la surface de pose.

10. Procédé selon la revendication 9, **caractérisé par** la détection d'une position de bord d'une bande fibreuse adjacente déjà posée sur l'outil, qui est adjacente au moins d'un côté à une bande fibreuse à poser.

11. Procédé selon la revendication 9 ou 10, **caractérisé par**
- la détection de la force et/ou de la direction d'une force de pressage réelle qui, lors de la pose de la bande fibreuse par la tête de pose, agit sur la bande fibreuse et
- le réglage de la force et/de la direction de la force de pressage agissant sur la bande fibreuse lors de la pose de la bande fibreuse en fonction de la force et/ou de la direction détectée de la force de pressage réelle et de la force et/ou de la direction d'une force de pressage de consigne prédéfinie par un dispositif de réglage du dispositif de pose de fibres.

12. Procédé selon l'une quelconque des revendications 9 à 11, **caractérisé par** la détection d'un angle d'inclinaison de la tête de pose par rapport à la surface de l'outil et/ou la détection d'un moment d'inclinaison de la tête de pose et la détermination de la direction de la force de pressage réelle à partir de l'angle d'inclinaison et/ou du moment d'inclinaison détectés par le dispositif de détection de force de pressage.

13. Procédé selon l'une quelconque des revendications 9 à 12, **caractérisé par** le réglage de la direction de la force de pressage de manière à obtenir une répartition uniforme de la force de pressage sur un rouleau de pressage disposé au niveau de la tête de pose pour poser la nappe fibreuse.
